(19) **Europäisches Patentamt / European Patent Office / Office européen des brevets**

(11) **EP 1 761 756 B1**

(12) **FASCICULE DE BREVET EUROPEEN**

(45) Date de publication et mention
de la délivrance du brevet:
**02.07.2008 Bulletin 2008/27**

(21) Numéro de dépôt: **05781820.5**

(22) Date de dépôt: **29.06.2005**

(51) Int Cl.:
***G01N 21/01*** *(2006.01)*

(86) Numéro de dépôt international:
**PCT/FR2005/050515**

(87) Numéro de publication internationale:
**WO 2006/005880 (19.01.2006 Gazette 2006/03)**

(54) **SYSTEME DE DETECTION SYNCHRONE DE FLUORESCENCE EN GOUTTE**

SYSTEM ZUR SYNCHRONEN FLUORESZENZDETEKTION IN EINEM TROPFEN

SYSTEM FOR SYNCHRONOUS DETECTION OF FLUORESCENCE IN A DROP

(84) Etats contractants désignés:
**AT BE BG CH CY CZ DE DK EE ES FI FR GB GR HU IE IS IT LI LT LU MC NL PL PT RO SE SI SK TR**

(30) Priorité: **01.07.2004 FR 0451402**

(43) Date de publication de la demande:
**14.03.2007 Bulletin 2007/11**

(73) Titulaire: **COMMISSARIAT A L'ENERGIE ATOMIQUE**
**75015 Paris (FR)**

(72) Inventeur: **BOUTET, Jérôme**
**F-38000 GRENOBLE (FR)**

(74) Mandataire: **Poulin, Gérard et al**
**Brevatome**
**3, rue du Docteur Lancereaux**
**75008 Paris (FR)**

(56) Documents cités:
| | |
|---|---|
| **US-A- 4 211 487** | **US-A- 6 043 878** |
| **US-A1- 2002 143 437** | **US-A1- 2004 007 377** |
| **US-A1- 2004 055 891** | **US-B1- 6 338 820** |

- **POLLACK M G ET AL: "ELECTROWETTING-BASED ACTUATION OF DROPLETS FOR INTEGRATED MICROFLUIDICS" LAB ON A CHIP, ROYAL SOCIETY OF CHEMISTRY, CAMBRIDGE, GB, vol. 2, no. 2, 11 mars 2002 (2002-03-11), pages 96-101, XP008038786 ISSN: 1473-0197 cité dans la demande**

**Description**

**DOMAINE TECHNIQUE ET ART ANTÉRIEUR**

L'invention concerne les techniques de mesure de fluorescence sur de petites quantités de liquide, et notamment sur des gouttes de liquide.

Là mesure en fluorescence consiste à exciter des marqueurs fluorescents dans un liquide, à l'aide d'une source de lumière d'une longueur d'onde prédéterminée.

Le signal réémis par les marqueurs est mesuré à une autre longueur d'onde (supérieure à la longueur d'onde d'excitation) à l'aide d'un détecteur.

Une difficulté se pose lorsqu'on cherche à mesurer de très faibles concentrations de marqueurs. Ces marqueurs fluorescents peuvent être soit des molécules fluorescentes, soit des boîtes quantiques.

Dans ce cas, on est amené à devoir détecter une faible quantité de fluoropohores dans un bruit de fond souvent important provenant par exemple de la fluorescence du support de l'échantillon mesuré, ou de poussières ou de moyens optiques environnants, tels que les optiques d'un microscope par exemple.

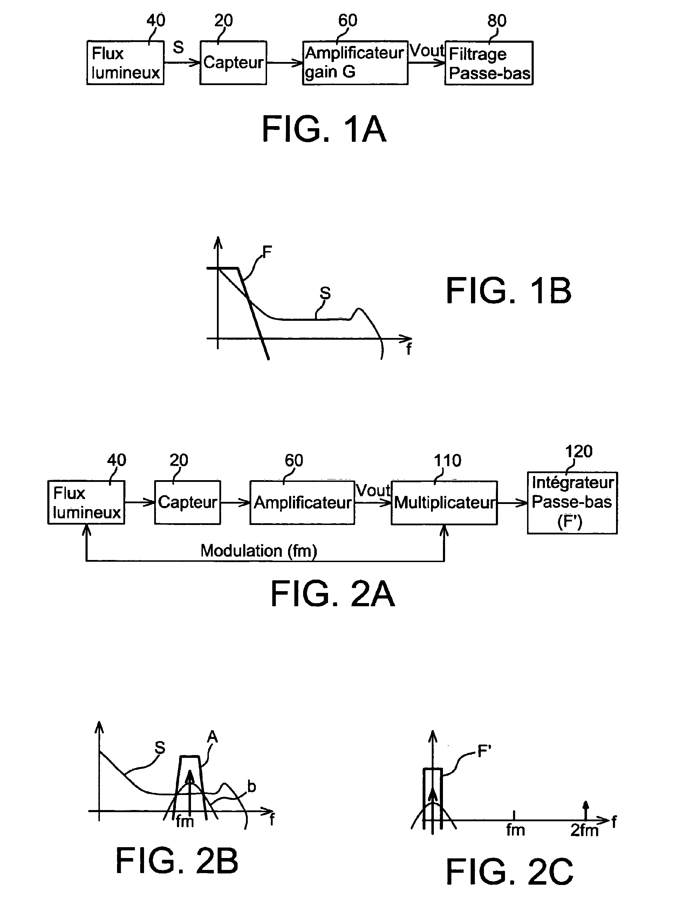

Comme illustré sur la figure 1A, une chaîne de mesure de fluorescence associe généralement un capteur 2, qui récupère un faisceau lumineux de fluorescence 4, un amplificateur 6 et un système 8 de filtrage qui atténue le bruit.

La tension en sortie de l'amplificateur 8 est du type :

$$Vout = G \times S + b(t),$$

Avec :

G = gain de l'amplificateur
S = grandeur physique mesurée
b(t) = bruit

Ainsi le filtre 8 va permettre de récupérer le signal utile et de minimiser la présence du bruit b(t).

Le phénomène étudié ayant généralement des variations lentes, il s'agit donc, la plupart du temps, d'un filtrage passe-bas.

Le filtrage peut être obtenu électroniquement ou en intégrant le signal sur une certaine période (cas des capteurs CCD) ou encore en le moyennant sur plusieurs images.

La figure 1B représente un signal S après amplification sélective par l'amplificateur 60, et la forme spectrale F du filtre passe - bas 80.

La limitation de ce type de dispositif est qu'il ne permet pas d'éliminer les bruits basse fréquence comme, par exemple, la fluorescence du substrat, des optiques d'un éventuel microscope, de filtres optiques ou bien encore les lentes fluctuations thermiques de l'expérience.

On peut se contenter de ce type de mesure si le rapport signal sur bruit correspond au cahier des charges.

Si ce n'est pas le cas, il faut trouver un moyen de minimiser l'influence des bruits basse fréquence.

Il est parfois possible d'atténuer l'effet de ces bruits en faisant des mesures différentielles par rapport à un témoin négatif, mais un tel dispositif présente un certain nombre d'inconvénients.

Il impose tout d'abord des contraintes d'encombrement car il est nécessaire d'ajouter un témoin négatif et un capteur supplémentaire.

Il impose aussi des contraintes de coût, car l'appareil est plus volumineux, et il nécessite donc un plus long développement.

Enfin la précision n'est pas toujours assurée car il n'est pas certain que le témoin négatif se trouve exactement dans les mêmes conditions thermiques ou chimiques que le témoin positif.

La détection synchrone permet de mesurer un signal dans un bruit important sans utiliser de témoin négatif ni de capteur supplémentaire.

Comme illustré sur la figure 2A, un dispositif de mesure avec détection synchrone comporte, outre un capteur 20, qui récupère un faisceau lumineux de fluorescence 40, un amplificateur 6, éléments déjà décrits ci-dessus en liaison avec la figure 1, un multiplicateur 110 et un intégrateur passe - bas 120.

Réaliser une mesure en détection synchrone consiste à faire varier périodiquement le phénomène physique étudié, de manière à moduler la grandeur physique mesurée.

Avec la modulation, le signal en sortie de l'amplificateur 6 devient :

$$\dot{V}out = G \times S \times \cos(\ddot{W}_m t) + b(t)$$

Avec :

G = gain de l'amplificateur,
S = grandeur physique mesurée,
$W_m$ = pulsation de modulation($w_m = 2\pi f_m$),
b(t) = bruit.

Le choix de la fréquence $W_m$ de modulation est lié à la zone de fréquence où la densité spectrale du bruit est minimum.

Le rôle du filtre sélectif 12 va consister à ne conserver en sortie de chaîne que la fréquence de modulation $f_m$.

Après amplification, par l'amplificateur 6, le signal est à nouveau multiplié par le multiplicateur 10 par la porteuse $\cos(w_m t)$ :

$$V_{mult} = (G \times S \times \cos(w_m t) + b(t)) \times \cos(w_m t)$$

$$\dot{V}_{mult} = G \times S/2 + (G \times S/2) \times \cos(2w_m t) + b(t) \times \cos(w_m t).$$

La première composante (GS/2) est continue, la deuxième est en $2w_m$ est la troisième correspond au bruit et est centrée en $w_m$.

Après la multiplication, le signal est ensuite filtré par un intégrateur passe - bas 12 pour ne conserver que la composante proportionnelle au signal du capteur : G x S/2.

La figure 2B représente le signal S après amplification par l'amplificateur 60, la forme spectrale A de l'amplificateur sélectif 60, et la forme du bruit b.

La figure 2C représente le signal après démodulation : les 3 composantes de $V_{mult}$ sont séparées ; celle qui est proportionnelle au signal du capteur (G x S/2) peut être isolée à l'aide du filtre passe bas 120 (de spectre F').

La détection synchrone « classique » est basée par exemple sur la modulation de l'alimentation du capteur ou sur la source de lumière. Mais elle ne permet pas d'éliminer la fluorescence du support ou des optiques car cette fluorescence est aussi modulée.

Le document US 6 338 820 décrit un dispositif permettant de réaliser des tests sur des sites réactionnels.

L'article de M.G. Pollack et al., paru dans Lab Chip, 2002, 2, 96 - 101, intitulé « Electrowetting based actuation of droplets for integrated microfluidics", décrit des techniques d'électromouillage.

Le document US 2004/0055891 décrit également un dispositif et un procédé pour la manipulation de gouttelettes par des techniques à base d'électromouillage.

Pratiquement, il se pose donc le problème de trouver un dispositif et un procédé permettant d'effectuer une détection synchrone sur des gouttes ou des microgouttes de liquide.

Un autre problème est de supprimer, dans une telle détection synchrone, toute fluorescence parasite, en ne conservant que le signal issu de la goutte.

De préférence, un tel procédé et un tel dispositifs doivent permettre de réaliser divers types de mesures, tels que des mesures de fluorescence ou de spectrométrie (absorption notamment) ou de colorimétrie.

## EXPOSÉ DE L'INVENTION

L'invention concerne un procédé de formation d'un signal optique modulé à partir d'une goutte d'un milieu liquide comportant :

- le positionnement d'une goutte de liquide sur une surface hydrophobe, sur le trajet d'un faisceau optique,
- la modulation de la forme de la goutte sur cette surface, par électromouillage, afin de moduler le signal obtenu après traversée de la goutte par le faisceau optique.

Selon l'invention, on utilise un procédé d'électromouillage pour moduler la forme de la goutte à une fréquence définie afin de réaliser une détection synchrone du signal lumineux provenant de la goutte et, notamment, d'éliminer le bruit de fond.

Par exemple, dans le cadre d'un laboratoire sur puce, lorsque la goutte, après un déplacement, arrive sur la zone de détection, une ou plusieurs électrodes peuvent être activées pour modifier la forme de la goutte, puis désactivées pour lui faire reprendre sa forme initiale, puis activée à nouveau et ainsi de suite.

La forme de la goutte varie donc périodiquement dans le temps, de même que par conséquent le profil que le signal présente dans le détecteur.

Celui-ci mesure un signal périodique et une chaîne d'instrumentation, ou des moyens de traitement du signal, peuvent analyser le signal provenant de cette détection synchrone sur le signal mesuré.

Le signal du capteur peut donc être modulé pour réaliser une détection synchrone, de la fluorescence ou de l'absorption ou de tout autre phénomène optique.

La modulation de la goutte peut être réalisée à l'aide d'une matrice bidimensionnelle ou d'une rangée d'électrodes de tailles identiques.

Dans ce cas, c'est l'activation et la désactivation des électrodes à proximité de la goutte qui module la forme de la goutte.

Selon une autre possibilité, la modulation peut être obtenue par une seule électrode activée puis désactivée, par exemple une électrode de forme allongée.

La goutte peut également être déplacée devant, puis hors, de la fenêtre de mesure. Ainsi, la fenêtre de détection reçoit soit la fluorescence de la goutte lorsque celle-ci est devant la fenêtre, soit la fluorescence du bruit de fond lorsque la goutte est hors de la fenêtre.

Cette méthode de détection synchrone dans la goutte peut s'appliquer à toute forme de détection optique, et notamment à une mesure en colorimétrie, ou en spectrométrie, ou en fluorescence.

La goutte peut être confinée, au moins lors de sa modulation, entre la surface hydrophobe et un substrat supérieur.

La goutte peut, avant modulation, n'être pas confinée par le substrat supérieur. On est alors dans le cas d'un système mixte, faisant passer la goutte d'un état non confiné à un état confiné.

Elle peut aussi, avant modulation, être confinée par le substrat supérieur.

L'invention concerne également un procédé de détection synchrone d'un signal optique, comportant la mise en oeuvre d'un procédé tel que décrit ci-dessus, puis une étape de démodulation du signal optique.

L'étape de démodulation du signal optique peut comporter une multiplication du signal modulé par un signal de porteuse à la fréquence de modulation et un filtrage passe - bas.

L'invention concerne également un dispositif d'analyse optique d'une goutte d'un milieu liquide comportant un premier substrat et des moyens de génération d'un rayonnement pour engendrer un faisceau optique, caractérisé en ce que:

- le premier substrat comporte une surface hydrophobe,
- les moyens de génération d'un rayonnement permettent d'engendrer un faisceau optique parallèlement à la surface hydrophobe,

et en ce qu'il comporte en outre :

- des moyens pour moduler la forme d'une goutte, sur cette surface, par électromouillage,
- et des moyens pour effectuer un traitement de démodulation d'un signal synchrone.

Un tel dispositif peut comporter en outre un deuxième substrat, disposé en regard de la surface hydrophobe.

Ce deuxième substrat peut comporter en outre une couche hydrophobe superficielle et/ou une électrode en dessous.

Les moyens pour moduler la forme d'une goutte, sur la surface hydrophobe, par électromouillage, peuvent comporter une pluralité d'électrodes sous la surface hydrophobe.

Ces électrodes peuvent être toutes de tailles identiques, ou bien l'une au moins des électrodes peut être de forme allongée.

Un dispositif de détection synchrone d'un signal optique peut comporter, outre un dispositif tel que décrit ci-dessus, des moyens pour effectuer un traitement de démodulation d'un signal synchrone.

## BRÈVE DESCRIPTION DES DESSINS

- Les figures 1A à 2C représentent des techniques connues et des formes de signaux avant et après traitement par ces techniques connues,
- les figures 3A - 3C représentent une réalisation d'un dispositif selon l'invention, en système ouvert,
- la figure 4 représente une modulation d'une goutte, sur le trajet d'un faisceau optique, en système ouvert,
- les figures 5A et 5B représentent des vues de dessus d'un dispositif et d'une goutte, avant et pendant une mesure selon l'invention,
- la figure 6 représente un dispositif mis en oeuvre dans le cadre de l'invention, en système fermé,
- les figures 7A et 7B représentent une mise en oeuvre de l'invention, en système mixte ouvert et fermé,
- la figure 8 représente un dispositif mis en oeuvre dans le cadre de l'invention en système fermé avec capot conducteur.
- les figures 9A et 9B représentent un dispositif mis en oeuvre dans le cadre de l'invention en système mixte avec capot conducteur.

## EXPOSÉ DÉTAILLÉ DE MODES DE RÉALISATION PARTICULIERS

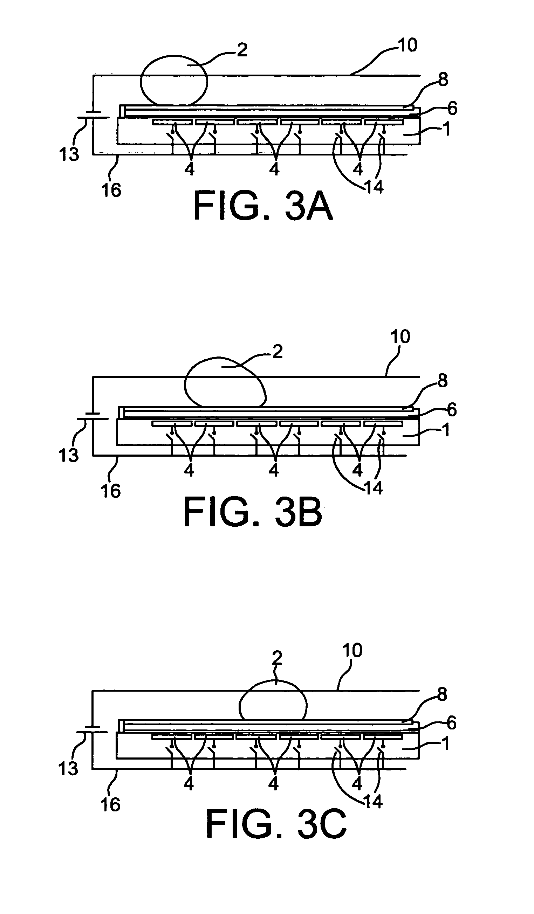

Un premier mode de réalisation de l'invention, en système ouvert, est illustré sur les figures 3A - 3C.

Ce mode de réalisation met en oeuvre un dispositif de déplacement ou de manipulation de gouttes de liquide reposant sur le principe de l'électromouillage sur un diélectrique.

Des exemples de tels dispositifs sont décrits dans l'article de M.G. Pollack, A.D. Shenderov, R.B. Fair, intitulé « Electro-wetting-based actuation of droplets for integrated microfluidics », Lab Chip 2 (1) (2002) 96-101; voir aussi page 5 de la demande.

Les forces utilisées pour le déplacement de gouttes de liquide sont alors des forces électrostatiques.

Le document FR 2 841 063 décrit également un dispositif mettant en oeuvre, en outre, un caténaire en regard des électrodes activées pour le déplacement en tant que contre électrode.

Le principe de ce type de déplacement est synthétisé sur les figures 3A - 3C.

Une goutte 2 repose sur un réseau 4 d'électrodes, dont elle est isolée par une couche diélectrique 6 et une couche hydrophobe 8 (figure 3A).

Le caractère hydrophobe de cette couche signifie que la goutte a un angle de contact, sur cette couche, supérieur à 90°.

Les électrodes sont elles - mêmes formées en surface d'un substrat 1.

Lorsque l'électrode 4-1 située à proximité de la goutte 2 est activée, à l'aide de moyens 14 de commutation, dont la fermeture établit un contact entre cette électrode et une source de tension 13 via un conducteur commun 16, la couche diélectrique 6 et la couche hydrophobe 8 entre cette électrode activée et la goutte, polarisée en permanence par une contre électrode 10, agissent comme une capacité. Les effets de charges électrostatiques induisent le déplacement de la goutte sur l'électrode activée. La contre électrode 10 permet le déplacement par électromouillage, elle maintient un contact électrique avec la goutte pendant son déplacement. Cette contre électrode 10 peut être soit un caténaire comme décrit dans FR - 2 841 063, soit un fil enterré, soit une électrode planaire sur ou dans le capot des systèmes confinés.

En système ouvert, s'il n'y a pas de déplacement, il est possible d'étaler et de moduler une goutte sur la surface hydrophobe, sans contre= électrode. C'est par exemple le cas si la goutte peut être amenée sur la surface hydrophobe par un système de dispense classique, les électrodes 4-1, 4-2 servant uniquement à étaler ou à moduler la goutte à l'endroit où elle a été déposée.

La goutte peut ainsi être éventuellement déplacée de proche en proche (figure 3C), sur la surface hydrophobe 8, par activation successive des électrodes 4-1, 4-2,... etc. et le long du caténaire 10.

Il est donc possible de déplacer des liquides, mais aussi de les mélanger (en faisant s'approcher des gouttes de liquides différents), et de réaliser des protocoles complexes.

Les documents cités ci-dessus donnent des exemples de mises en oeuvre de séries d'électrodes adjacentes pour la manipulation d'une goutte dans un plan, les électrodes pouvant en effet être disposées de manière linéaire, mais aussi en deux dimensions, définissant ainsi un plan de déplacement des gouttes.

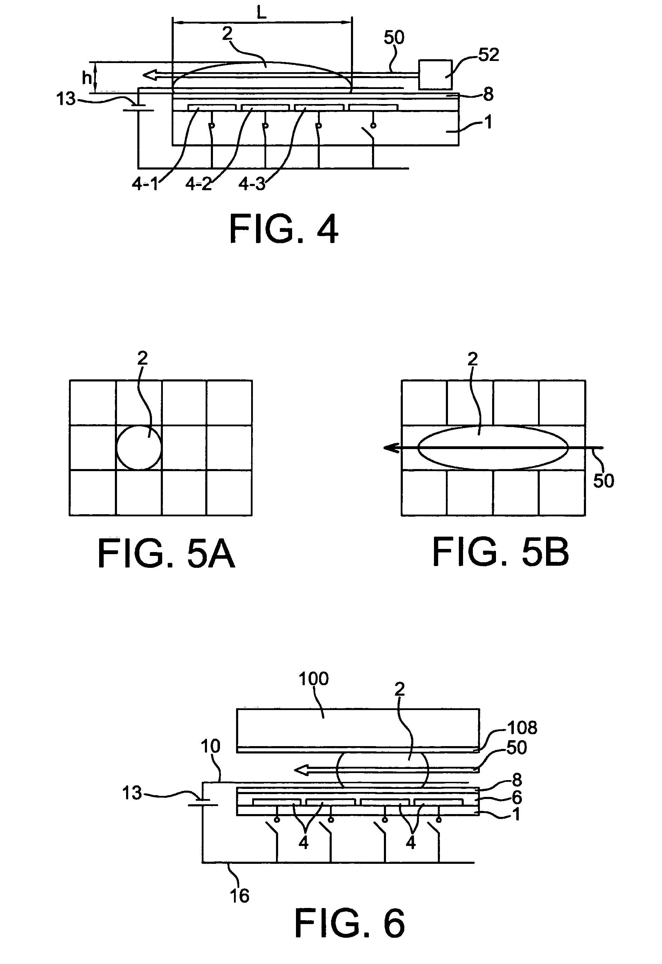

Comme illustré sur la figure 4, l'activation simultanée de plusieurs électrodes, désignées sur cette figure par les références 4=1, 4=2, 4-3, va permettre d'allonger la goutte 2 suivant la direction voulue, cette direction étant en fait déterminée par les électrodes 4-1, 4-2, 4-3 sélectionnées.

Les figures 5A et 5B représentent une vue de dessus du système, dans laquelle les électrodes 4 sont schématisées par des carrés, la goutte étant toujours désignée par la référence 2.

Avant activation des électrodes, la goutte 2 repose sur l'une d'entre elles ; après activation des électrodes 4-1, 4-2, 4-3, 4-4, la goutte 2 est étirée et positionnée au dessus de ces quatre mêmes électrodes. La figure 4 représente le cas où seules trois électrodes sont sélectionnées, étirant la goutte sur ces 3 électrodes.

La goutte est alors dans un état dans lequel sa longueur L (voir figure 4), mesurée parallèlement à la surface hydrophobe 8, est supérieure à sa hauteur h, par exemple dans un rapport L/h de l'ordre de 2 à 4 ou plus.

Ces mêmes électrodes sont ensuite désactivées, ce qui fait reprendre à la goutte sa forme initiale, puis activées de nouveau, puis désactivées de nouveau et ainsi de suite.

Un faisceau 50, de longueur d'onde adaptée à la mesure souhaitée (en vue d'une mesure d'absorption ou de fluorescence ou de colorimétrie ou de spectrométrie) voit donc son trajet dans la goutte notablement augmenté du fait de l'allongement de celle-ci, puis de nouveau réduit lorsque la goutte reprend sa forme initiale, puis de nouveau augmenté et ainsi de suite.

Le signal de mesure se trouve donc modulé par modulation de la forme de la goutte elle - même. Ceci est particulièrement avantageux lorsque le volume de liquide examiné est de l'ordre, au maximum, de quelques microlitres, et peut même atteindre de très faibles valeurs, par exemple de l'ordre du nanolitre.

De manière pratique, on positionnera des moyens 52 émetteurs de lumière, de manière à diriger un faisceau 50 le long du substrat.

Un détecteur 54 détectera lé signal modulé.

L'activation des électrodes 4 permettra, éventuellement d'abord de déplacer ou de positionner, puis de moduler la forme de la goutte 2 le long du faisceau 50, comme expliqué ci-dessus, et donc de moduler le signal mesuré correspondant.

Il est donc procédé à des suites d'activation - désactivation des électrodes 4 afin de moduler le signal comme expliqué ci-dessus.

La modulation peut avoir lieu à une fréquence comprise, par exemple, entre 10 Hz et 100 Hz.

La figure 6 représente un autre mode de réalisation de l'invention, en système fermé.

Sur cette figure, des références numériques identiques à celles des figures 3A - 4 y désignent des éléments identiques ou correspondants.

Ce dispositif comporte en outre un substrat supérieur 100, de préférence également recouvert d'une couche hydrophobe 108. Cet ensemble peut être éventuellement transparent, permettant une observation par le haut.

Là encore, un faisceau lumineux peut être dirigé entre les deux substrats.

De manière pratique, on positionnera des moyens émetteurs de lumière, analogues aux moyens 52 de la figure 5, de manière à diriger un faisceau 50 le long du substrat.

L'activation puis la désactivation d'électrodes 4 du substrat inférieur permet d'abord, éventuellement de déplacer ou de positionner, puis de moduler la forme de la goutte 2 le long du faisceau 50.

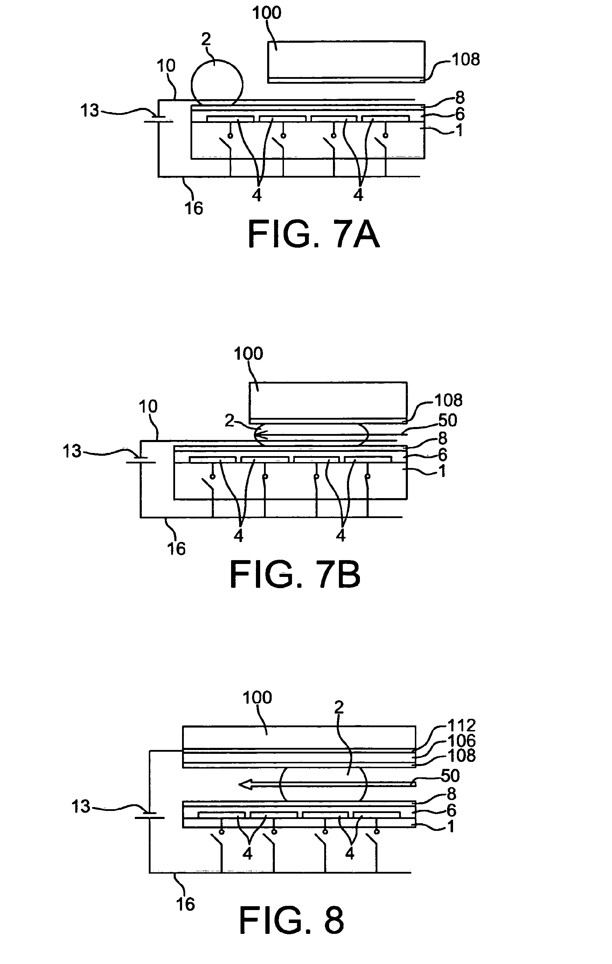

Les figures 7A et 7B représentent un système dans lequel une goutte 2 est initialement en milieu ouvert, l'activation sélective d'électrodes 4 permettant un alignement et une modulation de la goutte, en système fermé, dans une zone où le système est muni d'un capot 100, comme illustré ci-dessus en liaison avec la figure 4.

La figure 8 représenté une variante du système fermé, avec un capot conducteur 100, comportant une électrode ou un réseau d'électrodes 112, ainsi qu'une couche isolante 106 éventuelle et une couche hydrophobe 108.

Le caténaire 10 des figures précédentes est remplacé, dans ce mode de réalisation, par l'électrode 112. L'activation de cette électrode et l'activation puis la désactivation répétées des électrodes 4 permettent de déplacer la goutte 2 dans la position voulue puis de moduler sa forme comme déjà expliqué ci-dessus.

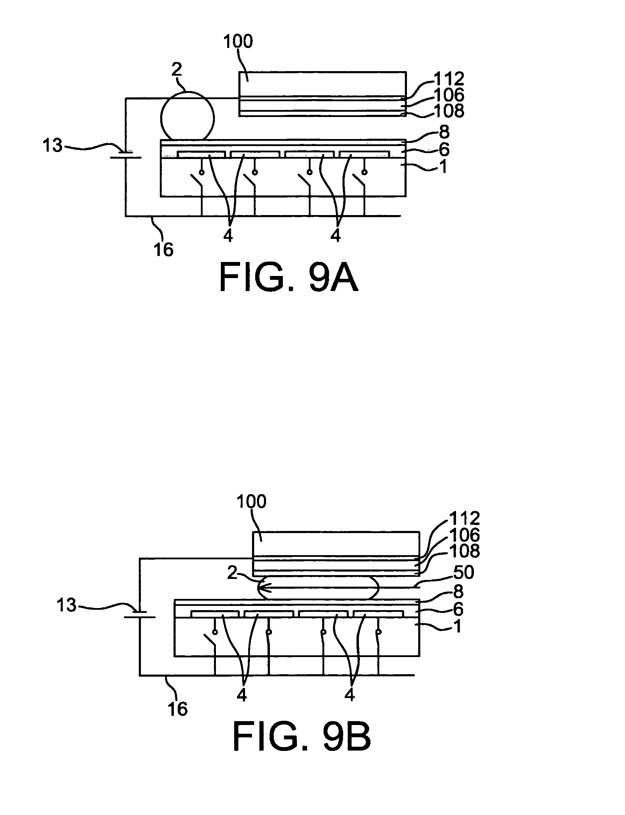

Les figures 9A et 9B, sur lesquelles des références numériques identiques à celles de la figure 8 y désignent des éléments identiques ou similaires, représentent un système mixte, dans lequel une goutte 2 est initialement en milieu ouvert (figure 8A), l'activation sélective d'électrodes 4 permettant une modulation de la forme de la goutte (figure 9B), en système fermé, dans une zone où le système est muni d'un capot 100, comme illustré ci-dessus en liaison avec la figure 8.

Dans les modes de réalisation décrits ci-dessus, plusieurs électrodes 4 sont activées pour déformer et moduler la goutte. Il est également possible de prévoir une électrode de forme allongée dont l'activation permettrait d'aplatir la goutte, encore par effet d'électromouillage. La désactivation de cette électrode ramènerait la goutte à sa forme initiale. La goutte pourrait ensuite être de nouveau déformée et ainsi de suite, réalisant ainsi, là encore, une modulation de la forme de la goutte sur la trajet du faisceau lumineux 50, et donc une modulation du signal mesuré, quelle que soit la nature de la mesure (absorption, fluorescence, transmission etc.).

Les électrodes 4 reçoivent une tension électrique issue d'un générateur, tension éventuellement amplifiée. L'activation ou la désactivation peut se faire via un relais ou via un multiplexeur analogique, ou numérique, ou une porte logique. L'activation des électrodes peut être pilotée par des moyens numériques de type ordinateur ou PC commandant des relais tel que les relais 14 de 1 figure 3A.

Typiquement, la distance entre l'éventuel conducteur 10 (figures 3A - 7B) d'une part et la surface hydrophobe 8 d'autre part est par exemple comprise entre 1 $\mu$m et 100 $\mu$m ou 500 $\mu$m.

Le conducteur 10 se présente par exemple sous la forme d'un fil de diamètre compris entre 10 $\mu$m et quelques centaines de $\mu$m, par exemple 200 $\mu$m. Ce fil peuvent être un fil d'or ou d'aluminium ou de tungstène ou d'autres matériaux conducteurs.

Lorsque deux substrats 1, 100 sont utilisés (figures 8 - 9B), ils sont distants d'une distance comprise entre,

par exemple, 10 $\mu$m et 100 $\mu$m ou 500 $\mu$m.

Quel que soit le mode de réalisation considéré, une goutte de liquide 2 aura un volume compris entre, par exemple, 1 nanolitre et quelques microlitres, par exemple entre 1 nl et 5$\mu$l ou 10 $\mu$l.

En outre chacune des électrodes 4 aura par exemple une surface de l'ordre de quelques dizaines de $\mu$m2 (par exemple 10 $\mu$m2) jusqu'à 1 mm2, selon la taille des gouttes à transporter, l'espacement entre électrodes voisines étant par exemple compris entre 1 $\mu$m et 10 $\mu$m.

La structuration des électrodes 4 peut être obtenue par des méthodes classiques des micro-technologies, par exemple par photolithographie. Les électrodes sont par exemple réalisées par dépôt d'une couche métallique (Au, ou Al, ou ITO, ou Pt, ou Cr, ou Cu, ...) par photolithographie. Le substrat est ensuite recouvert d'une couche diélectrique en SiN$_4$, ou SiO$_2$, .... Enfin, un dépôt d'une couche hydrophobe est effectué comme, par exemple,un dépôt de téflon réalisé à la tournette.

Des procédés de réalisation de puces incorporant un dispositif selon l'invention peuvent être directement dérivés des procédés décrits dans le document FR - 2 841 063.

Des conducteurs, et notamment des conducteurs enterrés 112 peuvent être réalisés par dépôt d'une couche conductrice et gravure de cette couche suivant le motif approprié de conducteurs, avant dépôt de la couche hydrophobe 108.

Les substrats 1, 100 sont par exemple en silicium, ou en verre, ou en plastique.

Une fois obtenu un signal modulé conformément à l'invention, ce signal peut être amplifié, multiplié par la fonction de modulation à la fréquence fm, fonction qui est connue, puis intégré comme déjà expliqué en liaison avec les figures 2A-2C .

Un dispositif selon l'invention peut donc comporter, en outre, des moyens de détection synchrone : des moyens amplificateurs 60, un multiplicateur 110, un intégrateur passe = bas 120 comme illustré sur la figure 2A.

Le traitement appliqué sera celui expliqué ci-dessus en liaison avec les figures 2B - 2C : une démodulation du signal optique, comportant une multiplication du signal modulé par un signal de porteuse à la fréquence de modulation et un filtrage passe - bas.

L'invention concerne donc un procédé de détection synchrone d'un signal optique, comportant la mise en oeuvre d'un procédé tel que décrit ci - dessus, afin d'acquérir un signal optique modulé, puis une étape de démodulation du signal optique.

L'invention présente notamment les avantages suivants :

- elle améliore le rapport signal sur bruit par rapport à une mesure classique. Elle est particulièrement adaptée à la mesure de signaux comportant du bruit basse fréquence (thermique...),
- comparée à une mesure différentielle, l'invention ne nécessite pas de témoin négatif ni de capteur supplémentaire,
- la modulation est réalisée par le dispositif d'électromouillage lui-même et ne nécessite pas de composant supplémentaire. La détection synchrone « classique » (modulation de la source de lumière par exemple), ne permet pas d'éliminer la fluorescence du support et des optiques car cette fluorescence là aussi est modulée. Le système proposé par l'invention ne module que la goutte, et donc permet de supprimer toute fluorescence parasite et ne conserve que ce qui vient de la goutte.

**Revendications**

1. Procédé d'analyse optique d'une goutte (2) d'un milieu liquide, comportant la formation d'un signal optique modulé à partir d'une goutte (2) d'un milieu liquide par :

   - le positionnement d'une goutte de liquide sur une surface hydrophobe (8), sur le trajet d'un faisceau optique (50),
   - la modulation de la forme de la goutte sur cette surface, par électromouillage, afin de moduler le signal obtenu après traversée de la goutte par le faisceau optique,
   - puis la démodulation du signal obtenu en sortie de goutte.

2. Procédé selon la revendication 1, la goutte étant confinée, au moins lors de sa modulation, entre ladite surface hydrophobe (8) et un substrat supérieur (100).

3. Procédé selon la revendication 2, la goutte n'étant, avant modulation, pas confinée par le substrat supérieur.

4. Procédé selon la revendication 2, la goutte étant, avant modulation, confinée par le substrat supérieur.

5. Procédé selon l'une des revendications 1 à 4, comportant en outre un déplacement de la goutte sur la surface hydrophobe.

6. Procédé selon l'une des revendications 1 à 5, la modulation étant obtenue par activation d'une pluralité d'électrodes (4), situées sous la couche hydrophobe (8).

7. Procédé selon l'une des revendications 1 à 5, la modulation étant obtenue par activation d'une seule électrode, située sous la couche hydrophobe (8).

8. Procédé selon l'une des revendications 1 à 7, l'analyse optique étant une analyse par colorimétrie, ou par spectrométrie ou par fluorescence.

9. Procédé selon l'une des revendications 1 à 8, comportant la mise en oeuvre d'un dispositif d'électromouillage, comportant un premier substrat recouvert de ladite couche hydrophobe (8), et une pluralité d'électrodes (4) disposées sous cette couche hydrophobe.

10. Procédé selon l'une des revendications 1 à 9, l'étape de démodulation du signal optique comportant une multiplication du signal modulé par un signal de porteuse à la fréquence de modulation et un filtrage passe - bas.

11. Dispositif d'analyse optique d'une goutte (2) d'un milieu liquide comportant un premier substrat et des moyens (52) de génération d'un rayonnement pour engendrer un faisceau optique,
**caractérisé en ce que**:

   - le premier substrat comporte une surface hydrophobe (8),
   - les moyens (52) de génération d'un rayonnement permettent d'engendrer un faisceau optique parallèlement à la surface hydrophobe,

et **en ce qu'**il comporte en outre :

   - des moyens (4) pour moduler la forme d'une goutte, sur cette surface, par électromouillage,
   - et des moyens (60, 110, 120) pour effectuer un traitement de démodulation d'un signal synchrone.

12. Dispositif selon la revendication 11, comportant en outre un deuxième substrat (100), disposé en regard de la surface hydrophobe.

13. Dispositif selon la revendication 12, le deuxième substrat comportant en outre une couche hydrophobe superficielle (108).

14. Dispositif selon la revendication 12 ou 13, le deuxième substrat comportant en outre une électrode (110).

15. Dispositif selon l'une des revendications 11 à 14, les moyens pour moduler la forme d'une goutte, sur la surface hydrophobe, par électromouillage, comportant une pluralité d'électrodes (4) sous la surface hydrophobe.

16. Dispositif selon la revendication 15 les électrodes étant toutes de tailles identiques.

17. Dispositif selon la revendication 15 l'une au moins des électrodes étant de forme allongée.


**Claims**

1. Method of optically analysing a droplet (2) of a liquid medium, comprising the formation of a modulated optical signal coming from a droplet (2) of a liquid medium by:

   - the positioning of a droplet of liquid on a hydrophobic surface (8), in the path of an optical beam (50),
   - the modulation of the shape of the droplet on this surface, by electrowetting, in order to modulate the signal obtained after passing the optical beam through the droplet,
   - then the demodulation of the signal obtained on exiting the droplet.

2. Method according to claim 1, the droplet being confined, at least during its modulation, between said hydrophobic surface (8) and an upper substrate (100).

3. Method according to claim 2, the droplet not being, before modulation, confined by the upper substrate.

4. Method according to claim 2, the droplet being, before modulation, confined by the upper substrate.

5. Method according to one of claims 1 to 4, further comprising a displacement of the droplet on the hydrophobic surface.

6. Method according to one of claims 1 to 5, the modulation being obtained by activation of a plurality of electrodes (4), located underneath the hydrophobic layer (8).

7. Method according to one of claims 1 to 5, the modulation being obtained by activation of a single electrode, located underneath the hydrophobic layer (8).

8. Method according to one of claims 1 to 7, the optical analysis being an analysis by colorimetry, or by spectrometry or by fluorescence.

9. Method according to one of claims 1 to 8, comprising the implementation of an electrowetting device, comprising a first substrate covered with said hydrophobic layer (8), and a plurality of electrodes (4) arranged under this hydrophobic layer.

10. Method according to one of claims 1 to 9, the step of demodulation of the optical signal comprising a multiplication of the modulated signal by a carrier signal at the frequency of modulation and a low pass filtering.

11. Device for optically analysing a droplet (2) of a liquid medium comprising a first substrate and means (52) of generating a radiation to generate an optical beam:
   **characterised in that**:

   - the first substrate comprises a hydrophobic surface (8),
   - the means (52) of generating a radiation enable to generate an optical beam parallel to the hydrophobic surface,

   and **in that** it further comprises:

   - means (4) of modulating the shape of a droplet, on this surface, by electrowetting,
   - means (60, 110, 120) of carrying out the demodulation treatment of a synchronous signal.

12. Device according to claim 11, further comprising a second substrate (100), arranged facing the hydrophobic surface.

13. Device according to claim 12, the second substrate further comprising a superficial hydrophobic layer (108).

14. Device according to claim 12 or 13, the second substrate further comprising an electrode (110).

15. Device according to one of claims 11 to 14, the means of modulating the shape of a droplet, on the hydrophobic surface, by electrowetting, comprising a plurality of electrodes (4) under the hydrophobic surface.

16. Device according to claim 15, the electrodes all being of identical size.

17. Device according to claim 15, one at least of the electrodes being of lengthened shape.

**Patentansprüche**

1. Verfahren zur optischen Analyse eines Tropfens (2) eines flüssigen Mediums, das die Bildung eines optischen Signals umfasst, moduliert durch einen Tropfen (2) eines flüssigen Mediums durch:

   - die Positionierung eines Flüssigkeitstropfens auf einer hydrophoben Oberfläche (8) auf dem Weg eines optischen Strahls (50),
   - die Modulation der Form des Tropfens auf dieser Oberfläche durch Elektrobenetzung, um das nach Durchquerung des Tropfens durch den optischen Strahl erhaltene Signal zu modulieren,
- sodann die Demodulation des am Tropfenausgang erhaltenen Signals.

2. Verfahren nach Anspruch 1, wobei der Tropfen wenigstens während seiner Modulation eingeschlossen ist zwischen der genannten hydrophoben Oberfläche (8) und einem oberen Substrat (100).

3. Verfahren nach Anspruch 2, wobei der Tropfen vor der Modulation nicht durch das obere Substrat eingeschlossen wird.

4. Verfahren nach Anspruch 2, wobei der Tropfen vor der Modulation durch das obere Substrat eingeschlossen wird.

5. Verfahren nach einem der Ansprüche 1 bis 4, außerdem eine Verschiebung des Tropfens auf der hydrophoben Oberfläche umfassend.

6. Verfahren nach einem der Ansprüche 1 bis 5, wobei die Modulation durch Aktivierung einer Vielzahl unter der hydrophoben Schicht (8) befindlicher Elektroden (4) realisiert wird.

7. Verfahren nach einem der Ansprüche 1 bis 5, wobei die Modulation durch Aktivierung einer einzigen unter der hydrophoben Schicht (8) befindlichen Elektrode (4) realisiert wird.

8. Verfahren nach einem der Ansprüche 1 bis 7, wobei die optische Analyse eine Colormetrie- oder Spektrometrie- oder Fluoreszenzanalyse ist.

9. Verfahren nach einem der Ansprüche 1 bis 8, die Einsetzung einer ein mit der genannten hydrophoben Schicht (8) überzogenes erstes Substrat umfassenden Elektrobenetzungsvorrichtung und einer Vielzahl unter dieser hydrophoben Schicht angeordneter Elektroden (4) umfassend.

10. Verfahren nach einem der Ansprüche 1 bis 9, wobei der Schritt zu Demodulation des optischen Substrats eine Multiplizierung des modulierten Signals durch ein Trägersignal mit der Modulationsfrequenz und eine Tiefpassfilterung umfasst.

11. Vorrichtung zur optischen Analyse eines Tropfens (2) eines flüssigen Mediums, ein erstes Substrat und Strahlungserzeugungseinrichtungen (52) zur Erzeugung eines optischen Strahls umfassend,
**dadurch gekennzeichnet, dass**:

- das erste Substrat eine hydrophobe Oberfläche (8) umfasst,
- die Strahlungserzeugungseinrichtungen (52) ermöglichen, einen optischen Strahl parallel zu der hydrophoben Oberfläche zu erzeugen,

und dass sie außerdem umfasst:

- Einrichtungen (4), um auf dieser Oberfläche durch Elektrobenetzung die Form eines Tropfens zu modulieren,
- und Einrichtungen (60, 110, 120), um eine Demodulationsverarbeitung eines synchronen Signals durchzuführen.

12. Vorrichtung nach Anspruch 11 mit außerdem einem gegenüber der hydrophoben Oberfläche angeordneten zweiten Substrat (100).

13. Vorrichtung nach Anspruch 12, wobei das zweite Substrat außerdem eine hydrophobe Oberflächenschicht (108) umfasst.

14. Vorrichtung nach Anspruch 12 oder 13, wobei das zweite Substrat außerdem eine Elektrode (110) umfasst.

15. Vorrichtung nach Anspruch 11 bis 14, wobei die Einrichtungen zum Modulieren der Form eines Tropfens - auf der hydrophoben Oberfläche, durch Elektrobenetzung -, unter der hydrophoben Oberfläche eine Vielzahl Elektroden (4) umfassen.

16. Vorrichtung nach Anspruch 15, wobei die Elektroden alle gleich groß sind.

17. Vorrichtung nach Anspruch 15, wobei wenigstens eine der Elektroden von länglicher Form ist.

40    20              60              80

Flux        S   Capteur      Amplificateur  Vout  Filtrage
lumineux                     gain G               Passe-bas

## FIG. 1A

F

S

f

## FIG. 1B

40        20          60              110             120

Flux        Capteur    Amplificateur  Vout  Multiplicateur  Intégrateur
lumineux                                                     Passe-bas
                                                             (F')

Modulation (fm)

## FIG. 2A

S    A

b

fm    f

## FIG. 2B

F'

fm    2fm   f

## FIG. 2C

**FIG. 3A**

**FIG. 3B**

**FIG. 3C**

**FIG. 4**

**FIG. 5A**

**FIG. 5B**

**FIG. 6**

100

2

10

13

108

8
6
1

16

4          4

# FIG. 7A

100

10

108

2          50
8
6
1

13

16

4          4

# FIG. 7B

100          2

112
106
108

50

8
6
1

13

16

4          4

# FIG. 8

FIG. 9A

FIG. 9B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6338820 B
- US 20040055891 A

- FR 2841063

**Littérature non-brevet citée dans la description**

- **M.G. POLLACK et al.** Electrowetting based actuation of droplets for integrated microfluidics. *Lab Chip,* 2002, vol. 2, 96-101

- **M.G. POLLACK ; A.D. SHENDEROV ; R.B. FAIR.** Electro-wetting-based actuation of droplets for integrated microfluidics. *Lab Chip,* 2002, vol. 2 (1), 96-101